# EUROPÄISCHE PATENTSCHRIFT

(11) **EP 1 153 057 B1**
(45) Veröffentlichungstag und Bekanntmachung des Hinweises auf die Patenterteilung: **15.09.2004**
(21) Anmeldenummer: 99958184.6
(22) Anmeldetag: 10.12.1999
(51) Int. Cl.: C08G 59/18, C08G 59/50, C08G 59/06, C09D 163/00

(54) **SELBSTDISPERGIERBARE HÄRTBARE EPOXIDHARZE**
SELF-DISPERSIBLE HARDENABLE EPOXIDE RESINS
RESINES EPOXY DURCISSABLES AUTODISPERSANTES

(30) Priorität: 19.12.1998 DE 19858920
(43) Veröffentlichungstag der Anmeldung: 14.11.2001
(73) Patentinhaber: Cognis Deutschland GmbH & Co. KG, 40589 Düsseldorf (DE)
(72) Erfinder: HUVER, Thomas, D-40625 Düsseldorf (DE); FOGLIANISI, Vincenzo, I-20136 Milano (IT); SULZBACH, Horst, D-40593 Düsseldorf (DE); LEUSCHNER, Tamara, D-46049 Oberhausen (DE)
(86) Internationale Anmeldenummer: PCT/EP1999/009737
(87) Internationale Veröffentlichungsnummer: WO 2000/037527

(56) Entgegenhaltungen:
- EP-A- 0 709 418
- EP-A- 0 747 413
- WO-A-95/18165
- WO-A-96/20971
- WO-A-96/20978
- US-A- 4 769 438

## Beschreibung

Die Erfindung betrifft selbstdispergierbare härtbare Epoxidharze auf Basis von Epoxy-Amin-Addukten, ein Verfahren zu deren Herstellung sowie die Verwendung dieser speziellen Epoxidharze zur Beschichtung fester Substrate.

### Stand der Technik

Härtbare Epoxidharze werden seit vielen Jahren als Komponenten in Beschichtungszusammensetzungen eingesetzt. Lange Zeit galten jedoch die Eigenschaften von Beschichtungen, die unter Verwendung wäßriger Epoxidharzdispersionen hergestellt wurden, solchen Beschichtungen, in welchen das Harz in einem organischen Lösungsmittel gelöst verwendet wurde, als unterlegen. Dies wurde hauptsächlich darauf zurückgeführt, daß die verwendeten Emulgatoren - beispielsweise Nonylphenolethoxylate - zur Oberfläche des Filmes wandern und dort dessen Eigenschaften negativ beeinflussen. Eine Möglichkeit dieses Problem zu lösen, besteht in der Verwendung von sogenannten Reaktivemulgatoren, welche bei der Vernetzung des Epoxidharzes mittels eines Di- oder Polyamines oder eines anderen Härters mit dem Härter reagieren und so Bestandteil der Beschichtung werden. Wäßrige Dispersionen spezieller Reaktivemulgatoren sind aus dem Stand der Technik bekannt.

In **US 4 315 044** wird eine stabile Epoxidharzdispersion beschrieben. Diese enthält (1) ein wässeriges Medium und (2) zwischen 50 - 70 Gew.-% eines selbstemulgierbaren Epoxidharzes, welches das Additonsprodukt von (a) 40 - 90 Gew.-% Diglycidylether eines bifunktionellen Phenoles, (b) 5-35 Gew.-% eines bifunktionellen Phenoles und (c) 2 - 15 Gew.-% des Diglycidylethers eines Polyoxyalkylenglycols ist und in welchem das Molekulargewicht des Epoxidharzes zwischen 500 und 20.000 liegt.

In **US 4 608 406** wird eine stabile Epoxiddispersion beschrieben. Diese enthält (1) ein wässeriges Medium und (2) zwischen 50 - 70 Gew.-% eines selbstemulgierbaren Epoxidharzes mit einem Molekulargewicht im Bereich von 1000 bis 20000, welches das Additonsprodukt von (a) 40 - 90 Gew.-% Diglycidylether eines bifunktionellen Phenoles, (b) 5 - 35 Gew.-% eines bifunktionellen Phenoles, (c) 2 - 15 Gew.-% des Diglycidylethers eines Polyoxyalkylenglycols und (d) 2 - 15 Gew.-% eines Alkylphenol-Formaldeyd-Novolack-Harzes ist.

In **EP-B-272 595** und **DE-A-36 43 751** wird ein Verfahren zur Herstellung und Verwendung von stabilen wässerigen Epoxidharz-Dispersionen bestehend aus a) 50 bis 80 Gew. % einer Epoxidverbindung mit mindestens zwei Epoxidgruppen pro Molekül und einem Epoxidäquivalentgewicht von 100 bis 2000, b) 35 bis 17 Gew. % eines aromatischen Polyols und c) 15 bis 3 Gew. % eines Kondensationsproduktes aus einem aliphatischen Polyol mit einem Molgewicht (Mw) von 200 bis 20000 und einer Epoxidverbindung mit mindestens zwei Epoxidgruppen pro Molekül und einem Epoxidäquivalentgewicht von 100 bis 2000, wobei das Äquivalentverhältnis der OH-Gruppen zu den Epoxidgruppen 1:0,85 bis 1:3,5 beträgt und das Epoxidäquivalentgewicht dieses Kondensationsproduktes zwischen 200 und mindestens 50000 liegt.

In **WO 95/18165** (Henkel Corp.) wird ein selbstdispergierbares, härtbares Epoxidharz beschrieben, welches durch Reaktion eines Epoxidharzes (a) mit einem Polyoxyalkylenamin (b), welches ein Molekulargewicht zwischen 3.000 und 15.000 besitzt, zugänglich ist. Die genannten Komponenten werden dabei in einem Verhältnis von (b) :(a) = 0,001:1,0 bis 0,060:1,0 Äquivalenten eingesetzt.

In **WO 96/20971** (Henkel Corp.) wird ein selbstdispergierbares, härtbares Epoxidharz beschrieben, welches durch Reaktion von (a) 1.0 Äquivalenten Epoxidharz, (b) 0,01 - 1,0 Äquivalenten eines polyfunktionellen Phenoles und (c) 0,005 - 0,5 Äquivalenten eines Amin-Epoxidadduktes zugänglich ist. Das Amin-Epoxidaddukt (c) stellt dabei ein Reaktionsprodukt von 1.0 Äquivalenten eines Polyepoxides und 0.3 - 0.9 Äquivalenten eines Polyoxyalkylendiamins dar.

In **EP-A-747 413** wird ein selbstemulgierbares Epoxidharz (A) herstellbar aus Massenanteilen von (A-1) 50 bis 95% einer oder mehrerer Epoxidverbindung(en) mit mindestens zwei Epoxidgruppen pro Molekül und einem Epoxidgruppengehalt von 300 bis 11.200 mmol/kg, (A-2) 5 bis 50% eines aromatischen Polyols, (A-3) 0 bis 25% modifizierender Verbindungen mit mindestens zwei epoxid-reaktiven Gruppen, (A-4) 5 bis 35% eines als Emulgator wirkenden Kondensationsproduktes aus (A-4-a) einem aliphatischen Polyol mit einer gewichtsmittleren molaren Masse M_{w} von 200 bis 20.000 g/mol und (A-4-b) einer Epoxidverbindung mit mindestens zwei Epoxidgruppen pro Molekül und einem Epoxidgruppengehalt von 500 bis 10.000 mmol/kg, wobei das Verhältnis der Anzahl der OH-Gruppen zur Anzahl der EP-Gruppen 1:2 bis 1:10 und der Epoxidgruppengehalt dieser Kondensationsprodukte (A-4) zwischen 100 und 6.700 mmol/kg beträgt.

### Beschreibung der Erfindung

Aufgabe der Erfindung war die Bereitstellung selbstdispergierbarer härtbarer Epoxidharze. Unter "selbstdispergierbar" wird dabei verstanden, daß diese Epoxidharze sich in wäßrigem Medium spontan und ohne den Einsatz zusätzlicher Additive wie Emulgier- oder Dispergieradditive dispergieren beziehungsweise emulgieren lassen. Mit anderen Worten: Bei den zu entwickelnden Epoxidharzen handelt es sich um solche, die die Eigenschaft haben, in Wasser selbstdispergierend und/oder -emulgierend zu sein. Der Einfachheit halber wird im Rahmen der vorliegenden Erfindung hierfür der Ausdruck "selbstdispergierend" gebraucht. Eine weitere Aufgabenstellung war es, wäßrige Dispersionen selbstdispergierbarer härtbarer Epoxidharze bereitzustellen, die sich durch hohe Lagerstabilität unter praxisüblichen Lagerungsbedingungen auszeichnen sollten. Eine weitere Aufgabenstellung war die Bereitstellung von Beschichtungs-Zusammensetzungen mit einem Gehalt an einem selbstdispergierbaren härtbaren Epoxidharz, wobei die Beschichtung, die nach dem Härtungsvorgang aus der BeschichtungsZusammensetzung resultiert, sich durch ausgezeichnete Eigenschaften auszeichnen sollte.

Überaschenderweise wurde nun gefunden, daß Epoxidharze die erhältlich sind durch Reaktion von (a) 1,0 Äquivalenten Epoxidharz, (b) 0,01 - 1,0 Äquivalenten eines polyfunktionellen Phenoles und (c) 0,005 - 0,5 Äquivalenten eines Amin-Epoxidadduktes, wobei das Amin-Epoxidaddukt (c) ein Reaktionsprodukt von 1,0 Äquivalenten eines aromatischen Polyepoxides und 0,10 bis 0,28 Äquivalenten eines Polyoxyalkylenamins darstellt, die genannten Anforderungen in jeder Hinsicht ausgezeichnet erfüllen.

Gegenstand der vorliegenden Erfindung sind zunächst selbstdispergierbare härtbare Epoxidharze. die dadurch erhältlich sind, daß man (a) 1,0 Äquivalente Epoxidharz, (b) 0,01 - 1,0 Äquivalente eines polyfunktionellen Phenoles und (c) 0,005 - 0,5 Äquivalente eines Amin-Epoxidadduktes, wobei das Amin-Epoxidaddukt (c) ein Reaktionsprodukt eines aromatischen Polyepoxides mit einem Polyoxyalkylenamin darstellt, umsetzt, und wobei man die zur Herstellung des Amin-Epoxidadduktes (c) eingesetzten Verbindungen, nämlich das aromatische Polyepoxid und das Polyoxyalkylenamin, im Äquivalentverhältnis von 1 : 0,10 bis 1 : 0,28 einsetzt.

Der Ausdruck "Äquivalentverhältnis" ist dem Fachmann geläufig. Der grundlegende Gedanke hinter dem Begriff des Äquivalents ist der, daß man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Im Rahmen der vorliegenden Erfindung gilt, daß unter einer reaktiven Gruppe nicht die kleinstmögliche reaktionsfähige Gruppe zu verstehen ist, sondern die funktionelle Gruppe. Bei Aminen mit NH₂-Gruppen bedeutet das etwa, daß die NH₂-Gruppe gemeint ist, und nicht eine NH-Einheit.

Ausdrücklich sei festgestellt, daß die Lehre der vorliegenden Erfindung sich von der Lehre der oben genannten WO 96/20971 durch das spezielle Äquivalentverhältnis unterscheidet, das bei der Herstellung der Komponente (c) aus Polyepoxid und Polyoxyalkylendiamin gewählt wird. Gemäß der WO 96/20971 sind Polyepoxid und Polyoxyalkylendiamin im Äquivalentverhältnis von 1 : 0,3 bis 1 : 0,9 einzusetzen, gemäß der Lehre der vorliegenden Erfindung sind Polyepoxid und Polyoxyalkylendiamin im Äquivalentverhältnis von 1 : 0,10 bis 1 : 0,28 einzusetzen. Dabei ist ein Äquivalentverhältnis im Bereich von 1 : 0,15 bis 1 : 0,25 bevorzugt.

Im Hinblick auf die Komponenten (a), (b) und (c) und deren Umsetzung sei im übrigen explizit auf die Ausführungen der WO 96/20971 verwiesen. Die Offenbarung der WO 96/20971 wird also ausdrücklich in die Offenbarung der vorliegenden Erfindung einbezogen.

Unter **Epoxidharzen (a)** werden im Rahmen der vorliegenden Erfindung - und in Anlehnung an die oben genannte WO 96/20971 (vergleiche dort Seite 13, Zeile 10 bis Seite 16, Zeile 13) - Polyglycidylether mehrwertiger Phenole verstanden. Diese Verbindungen weisen zwei oder mehr Epoxidgruppen und ein oder mehrere aromatische Ringe mit je sechs C-Atomen pro Molekül auf. Als mehrwertige Phenole kommen vorzugsweise die unter (b) beschriebenen Verbindungen in Frage.

Unter **polyfunktionellen Phenolen (b)** werden im Rahmen der vorliegenden Erfindung - und in Anlehnung an die oben genannte WO 96/20971 (vergleiche dort Seite 16, Zeile 15 bis Seite 17, Zeile 18) - Verbindungen mit mehreren Hydroxylgruppen, die kovalent an ein oder mehrere aromatische Ringe mit je sechs C-Atomen pro Molekül gebunden sind, verstanden.

Beispiele für geeignete Verbindungen (b) sind: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxydiphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen. Bisphenol A ist als Verbindung (b) ganz besonderes bevorzugt.

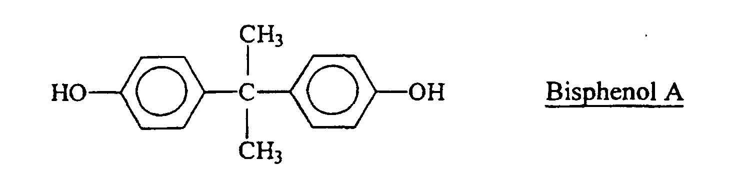

Unter **Polyoxyalkylenaminen** - eine der Verbindungsklassen zur Herstellung der Komponente (c) - werden im Rahmen der vorliegenden Erfindung - und in Anlehnung an die oben genannte WO 96/20971 (vergleiche dort Seite 7, Zeile 22 bis Seite 10, Zeile 17) - Amin-Verbindungen verstanden, die sowohl eine aminische Gruppe, als auch eine Polyethergruppe, die Wasserlöslichkeit vermittelt, enthalten.

Als Polyoxyalkylenamine - im folgenden auch als Komponente (c1) bezeichnet - dienen insbesondere Mono-, Di- oder Polyaminopolyalkylenoxid-Verbindungen. Darunter ist zu verstehen, daß diese Verbindungen einerseits ein, zwei oder mehrere Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind. Die Verbindungen (c1) sind zumindest teilweise bei 20 °C in Wasser lösliche Substanzen.

Die Herstellung der Verbindungen (c1) ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform setzt man als Verbindungen (c1) Substanzen der allgemeinen Struktur R¹-O-R²-CH₂CH(R³)-NH₂ ein. Darin bedeuten:
- R¹ eine einwertige organische Gruppe mit 1-12 C-Atomen, die aliphatisch, cycloaliphatisch oder aromatisch sein kann
- R² eine Polyoxyalkylengruppe, die aus 5-200 Polyoxyalkyleneinheiten, insbesondere EO- und/oder PO-Einheiten, aufgebaut ist
- R³ Wasserstoff oder ein aliphatischer Rest mit bis zu 4 C-Atomen.

Besonders geeignete Vertreter der Verbindungen (c1) sind im Rahmen der vorliegenden Erfindung die dem Fachmann bekannten "Jeffamine" , bei denen es sich um handelsübliche Substanzen handelt. Beispielhaft sei hier "Jeffamin 2070" genannt, das nach Angaben der Firma Texaco durch Umsetzung von Methanol mit Ethylenoxid und Propylenoxid nebst Umwandlung der terminalen Hydroxylgruppen des zunächst erhaltenen Zwischenproduktes in Amingruppen hergestellt wird (vergleiche die oben genannte WO 96/20971, Seite 10, Zeilen 12-15).

Die Verbindungen (c1) haben vorzugsweise mittlere Molekulargewichte (Zahlenmittel; Mn) im Bereich von 148 bis 5000, insbesondere zwischen 400 und 2000.

Unter **aromatischen Polyepoxiden** - eine der Verbindungsklassen zur Herstellung der Komponente (c) - werden im Rahmen der vorliegenden Erfindung - und in Anlehnung an die oben genannte WO 96/20971 (vergleiche dort Seite 10, Zeile 19 bis Seite 13, Zeile 8) - aromatische Verbindungen verstanden, die zwei oder mehrere Epoxidgruppen pro Molekül enthalten. Die aromatischen Polyepoxide werden im folgenden auch als Komponente (c2) bezeichnet.

Das **Amin-Epoxid-Addukt (c)** kann bei der Herstellung der erfindungsgemäßen selbstdispergierenden härtbaren Harze entweder als solches, also separat hergestellte Verbindung, eingesetzt werden (Variante 1). Es kann aber auch in-situ gebildet werden (Variante 2). Bei Variante 1 setzt man also die fertigen Komponenten (a), (b) und (c) zur Herstellung des erfindungsgemäßen Harzes ein. Bei Variante 2 setzt man die Komponenten (a), (b), (c1) und (c2) zur Herstellung des erfindungsgemäßen Harzes ein, wobei (c) aus (c1) und (c2) in-situ entsteht.

Die erfindungsgemäßen selbstdispergierbaren härtbaren Epoxidharze können mit nicht-reaktiven organischen Lösungsmitteln - genauer gesagt Colösungsmitteln - und/oder von Reaktivverdünnem kombiniert werden (vergleiche WO 96/20971 Seite 22, Zeile 1 bis Seite 24, Zeile 13).

Ein Vorteil der erfindungsgemäßen Epoxidharze liegt in deren ausgezeichneten anwendungstechnischen Eigenschaften, insbesondere deren Eignung für Beschichtungszwecke. Hinsichtlich der Herstellung der erfindungsgemäßen Epoxidharze liegt ein Vorteil darin, daß die Reaktion nicht mehrere Schritte erfordert, sondern in einfacher Weise als Eintopfreaktion durchführbar ist.

Ein weiterer Gegenstand der Erfindung sind wäßrige Dispersion mit einem Gehalt an einem oder mehreren der selbstdispergierbaren härtbaren Epoxidharze.

Vorzugsweise liegt der Gehalt an den erfindungsgemäßen Epoxidharzen in diesen Dispersionen im Bereich von 40 bis 70 Gew-.% - bezogen auf die gesamte Dispersion.

Wäßrige Dispersionen mit einem Gehalt der nach dem erfindungsgemäßen Verfahren zugänglichen Epoxidharze zeichnen sich in vielen Fällen durch sehr geringe mittlere Teilchengrößen aus, die im Bereich von etwa 1000 nm oder weniger und insbesondere von etwa 800 nm oder weniger liegen. Dies führt zu sehr guten Materialeigenschaften der mit diesen Dispersionen hergestellten Beschichtungen. Besonders gute Materialeigenschaften werden erhalten, wenn die mittlere Teilchengröße unterhalb von etwa 300 nm liegt. Die mittlere Teilchengröße ist dabei zu verstehen als Durchschnittswert der Teilchengrößen, der durch Summieren der Werte von n Einzelmessungen und anschließende Division durch n erhalten wird. Die mittleren Teilchengrößen wurden im Rahmen der vorliegenden Erfindung mittels eines "Coulter N4 Plus Submicron Particle Sizer" der Firma Coulter, Miami FL, 33196, USA bestimmt. Dabei wird die Streuung von Laserlicht an einer stark verdünnten Dispersion zur Teilchengrößen-Bestimmung genutzt. Das Gerät führt eine Vielzahl von Einzelmessungen aus und liefert als Ergebnis die mittlere Teilchengröße. Die oben genannten Werte beziehen sich auf Messungen der Streuung unter einem Winkel von 90° relativ zum einfallenden Laserstrahl.

Ein weiterer Gegenstand der Erfindung ist ein Verfahren zur Herstellung von selbstdispergierbaren härtbaren Epoxidharzen, wobei man (a) 1,0 Äquivalente Epoxidharz, (b) 0,0 1 - 1,0 Äquivalente eines polyfunktionellen Phenoles und (c) 0,005 - 0,5 Äquivalente eines Amin-Epoxidadduktes umsetzt. Dabei ist das Amin-Epoxidaddukt (c) ein Reaktionsprodukt eines aromatischen Polyepoxides mit einem Polyoxyalkylendiamin, wobei man die zur Herstellung des Amin-Epoxidadduktes (c) eingesetzten Verbindungen, nämlich das aromatische Polyepoxid und das Polyoxyalkylenamin, im Äquivalentverhältnis von 1: 0,10 bis 1 : 0,28 einsetzt. In einer bevorzugten Ausführungsform führt man die Reaktion als Eintopfreaktion durch.

Die erfindungsgemäßen selbstdispergierbaren härtbaren Epoxidharze eignen sich in Kombination mit geeigneten Härtungsmitteln, insbesondere den dem Fachmann einschlägig bekannten aminischen Härtungsmitteln, und gegebenenfalls weiteren üblichen Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyethylen, Polypropylen), Kompostwerkstoffen, Keramik und vorbehandelten oder nicht vorbehandelten Metallen verwendet werden. Durch ihre guten Eigenschaften sind die erfindungsgemäßen Epoxidharze auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Ein weiterer Gegenstand der Erfindung ist dementsprechend die Verwendung der erfindungsgemäßen selbstdispergierbaren Epoxidharze für die genannten Einsatzzwecke.

Wäßrige Dispersionen mit einem Gehalt an den erfindungsgemäßen Epoxidharzen zeichnen sich durch gute Verdünnbarkeit sowie durch günstige anwendungstechnische Eigenschaften aus. Sie eignen sich neben den bereits angesprochenen Einsatzzwecken zur Verwendung in der Elektrotauchlackierung. Darüber hinaus eignen sich wäßrige Dispersionen mit einem Gehalt an den erfindungsgemäßen Epoxidharzen zur Herstellung wasserverdünnbarer Klebstoffe, als Bindemittel für Textilien, organische und/oder anorganische Materialien, sowie als Additive für Kunststoffzemente.

### BEISPIELE

### Allgemeines

Das Epoxid-Äquivalentgewicht einer Substanz ist diejenige Menge der Substanz (in Gramm), welche 1 mol Oxiranringe enthält.
Zur Bestimmung der mittleren Teilchengrößen wurde ein "Coulter N4 Plus Submicron Particle Sizer" der Firma Coulter, Miami FL, 33196, USA eingesetzt. Die gemessenen Werte beziehen sich auf Messungen der Streuung unter einem Winkel von 90° relativ zum einfallenden Laserstrahl.
Die Viskosität der Dispersionen wurde bei 20 °C mittels eines Brookfield-Viskosimeters (Spindel 4; 50 Umdrehungen pro Minute) bestimmt.

### Beispiel 1

### Stufe I: Herstellung des Festharzes

### Ansatz:

| | | |
|---|---|---|
| 1) | 369,23 g | Chemres E20 (Bisphenol-A basiertes Epoxidharz der Firma Henkel SpA mit einem mittleren Epoxidäquivalentgewicht von ungefähr 190 g) |
| 2) | 19,06 g | Jeffamine M 600 (Firma Huntsman) |
| 3) | 60,76 g | Jeffamine M 2070 (Firma Huntsman) |
| 4) | 105,33 g | Bisphenol A |
| 5) | 0,41 g | Triphenylphosphin |
| 6) | 74,55 g | Ethoxypropanol |

### Durchführung:

Die Komponenten 1) bis 3) wurden nacheinander in einen Reaktor gegeben und 2 Stunden lang auf 125 bis 135 °C erhitzt. Anschließend wurden die Komponenten 4) und 5) zugegeben und die Reaktionsmischung 5 Stunden lang auf 140 bis 160 °C erhitzt. Zu dem so erhaltenen Festharz wurde anschließend Komponente 6) zugegeben, die als Lösungsmittel und Viskositätsregler dient und die Mischung homogenisiert. Die Auswaage betrug 629,34 g; die gesamte Substanz wurde zur Herstellung einer wäßrigen Dispersion eingesetzt (siehe Stufe II).

### Stufe II: Herstellung der Festharz-Dispersion

### Ansatz:

| | | |
|---|---|---|
| 1 ) | 629,34 | g Auswaage aus Stufe I |
| 2) | 86,89 g | destilliertes Wasser einer Temperatur von 65 °C |
| 3) | 9,0 g | C12/14-Fettalkohol-glycidylether |
| 4) | 271,86 g | destilliertes Wasser einer Temperatur von 20 °C |
| 5) | 6,0 g | Ethylenglykol |
| 6) | 5,0 g | Nopco DSX 1550 (Polyurethanpolymer in Wasser/Butyldiglykol; Firma Nopco) |

### Durchführung:

Komponente 1) wurde auf 65 °C erwärmt. Nun wurde Komponente 2) zugefügt und die Mischung 15 Minuten bei dieser Temperatur homogenisiert. Man ließ auf 40 bis 45 °C abkühlen und prüfte (durch Entnahme einer kleinen Probe der Emulsion und Lösen dieser Probe in einem großen Überschuß Wasser, wobei sich die Emulsion sofort spontan im Wasser fein verteilen muß), ob eine Inversion des Emulsionstyps von W/O zu O/W stattgefunden hatte. Dies traf zu. Nun wurd die Komponente 3) zugegeben und die Mischung 10 Minuten homogenisiert, anschließend erfolgte - zuerst langsam, bei niedriger werdender Viskosität schneller - die Zugabe der Komponente 4) nebst 15-minütigem Rühren ohne Kühlung. Schließlich wurde Komponente 5) zugegeben, die Mischung homogenisiert und anschließend wurde Komponente 6) eingerührt.
Die Dispersion wurde wie folgt charakterisiert: Der mittlere Partikeldurchmesser betrug 800 nm, die Viskosität betrug 500 mPas, das Epoxid-Äquivalentgewicht betrug 1100.

### Beispiel 2

### Stufe I: Herstellung des Festharzes

### Ansatz:

| | | |
|---|---|---|
| 1) | 30,97 g | Chemres E20 (Bisphenol-A basiertes Epoxidharz der Firma Henkel SpA mit einem mittleren Epoxidäquivalentgewicht von ungefähr 190 g) |
| 2) | 79,13 g | Jeffamine M 2070 (Firma Huntsman) |
| 3) | 292,62 g | Chemres E20 |
| 4) | 88,88 g | Bisphenol A |
| 5) | 0,35 g | Triphenylphosphin |
| 6) | 62,89 g | Ethoxypropanol |

### Durchführung:

Die Komponenten 1) bis 2) wurden nacheinander in einen Reaktor gegeben und 3 Stunden lang auf 130 °C erhitzt. Anschließend wurden die Komponenten 3) bis 5) zugegeben und die Reaktionsmischung 5 Stunden lang auf 140 bis 160 °C erhitzt. Zu dem so erhaltenen Festharz wurde anschließend Komponente 6) zugegeben, die als Lösungsmittel und Viskositätsregler dient und die Mischung homogenisiert.

Die Auswaage betrug 554,85 g; die gesamte Substanz wurde zur Herstellung einer wäßrigen Dispersion eingesetzt (siehe Stufe II).

### Stufe II: Herstellung der Festharz-Dispersion

### Ansatz:

| | | |
|---|---|---|
| 1) | 554,85 | g Auswaage aus Stufe I |
| 2) | 77,60 g | destilliertes Wasser einer Temperatur von 50 °C |
| 3) | 8,06 g | C12/14-Fettalkohol-glycidylether ("Rütapox Z8", Firma Rüttgers) |
| 4) | 242,83 g | destilliertes Wasser einer Temperatur von 20°C |
| 5) | 5,37 g | Ethylenglykol |
| 6) | 4,48 g | Nopco DSX 1550 (Polyurethanpolymer in Wasser/Butyldiglykol; Firma Nopco) |

### Durchführung:

Komponente 1) wurde auf 65 °C erwärmt. Nun wurde Komponente 2) zugefügt und die Mischung 15 Minuten bei 65 °C Temperatur homogenisiert. Man ließ dann auf 45 °C abkühlen und prüfte (durch Entnahme einer kleinen Probe der Emulsion und Lösen dieser Probe in einem großen Überschuß Wasser, wobei sich die Emulsion sofort spontan im Wasser fein verteilen muß), ob eine Inversion des Emulsionstyps von W/O zu O/W stattgefunden hatte. Dies traf zu. Nun wurde die Komponente 3) zugegeben und die Mischung 10 Minuten homogenisiert, anschließend erfolgte - zuerst langsam, bei niedriger werdender Viskosität schneller - die Zugabe der Komponente 4) nebst 15-minütigem Rühren ohne Kühlung. Schließlich wurde Komponente 5) zugegeben, die Mischung homogenisiert und anschließend wurde Komponente 6) eingerührt.
Die Dispersion wurde wie folgt charakterisiert: Der mittlere Partikeldurchmesser betrug 800 nm, die Viskosität betrug 1800 mPas, das Epoxid-Äquivalentgewicht betrug 1100.

### Beispiel 3

### Stufe I: Herstellung des Festharzes

### Ansatz:

| | | |
|---|---|---|
| 1) | 19,54 g | Chemres E20 (Bisphenol-A basiertes Epoxidharz der Firma Henkel SpA mit einem mittleren Epoxidäquivalentgewicht von ungefähr 190 g) |
| 2) | 49,93 g | Jeffamine M 2070 (Firma Huntsman) |
| 3) | 285,01 g | Chemres E20 |
| 4) | 85,03 g | Bisphenol A |
| 5) | 0,34 g | Triphenylphosphin |
| 6) | 60,17 g | Ethoxypropanol |

### Durchführung:

Die Komponenten 1) bis 2) wurden nacheinander in einen Reaktor gegeben und 3 Stunden lang auf 130 °C erhitzt. Anschließend wurden die Komponenten 3) bis 5) zugegeben und die Reaktionsmischung 5 Stunden lang auf 140 bis 160 °C erhitzt. Zu dem so erhaltenen Festharz wurde anschließend Komponente 6) zugegeben, die als Lösungsmittel und Viskositätsregler dient und die Mischung homogenisiert. Die Auswaage betrug 500,02 g; die gesamte Substanz wurde zur Herstellung einer wäßrigen Dispersion eingesetzt (siehe Stufe II).

### Stufe II: Herstellung der Festharz-Dispersion

### Ansatz:

| | | |
|---|---|---|
| 1) | 500,02 g | Auswaage aus Stufe I |
| 2) | 69,92 g | destilliertes Wasser einer Temperatur von 50 °C |
| 3) | 7,26 g | C12/14-Fettalkohol-glycidylether ("Rütapox Z8", Firma Rüttgers) |
| 4) | 218,80 g | destilliertes Wasser einer Temperatur von 20 °C |
| 5) | 4,84 g | Ethylenglykol |
| 6) | 4,04 g | Nopco DSX 1550 (Polyurethanpolymer in Wasser/Butyldiglykol; Firma Nopco) |

### Durchführung:

Komponente 1) wurde auf 65 °C erwärmt. Nun wurde Komponente 2) zugefügt und die Mischung 15 Minuten bei 65 °C Temperatur homogenisiert. Man ließ dann auf 45 °C abkühlen und prüfte (durch Entnahme einer kleinen Probe der Emulsion und Lösen dieser Probe in einem großen Überschuß Wasser, wobei sich die Emulsion sofort spontan im Wasser fein verteilen muß), ob eine Inversion des Emulsionstyps von W/O zu O/W stattgefunden hatte. Dies traf zu. Nun wurde die Komponente 3) zugegeben und die Mischung 10 Minuten homogenisiert, anschließend erfolgte - zuerst langsam, bei niedriger werdender Viskosität schneller - die Zugabe der Komponente 4) nebst 15-minütigem Rühren ohne Kühlung. Schließlich wurde Komponente 5) zugegeben, die Mischung homogenisiert und anschließend wurde Komponente 6) eingerührt.

Die Dispersion wurde wie folgt charakterisiert: Der mittlere Partikeldurchmesser betrug 910 nm, die Viskosität betrug 500 mPas, das Epoxid-Äquivalentgewicht betrug 1100.

### Beispiel 4

### Stufe I: Herstellung des Festharzes

### Ansatz:

| | | |
|---|---|---|
| 1) | 30,04 g | Chemres E20 (Bisphenol-A basiertes Epoxidharz der Firma Henkel SpA mit einem mittleren Epoxidäquivalentgewicht von ungefähr 190 g) |
| 2) | 36,42 g | Jeffamine M 1000 (Firma Huntsman) |
| 3) | 285,21 g | Chemres E20 |
| 4) | 86,63 g | Bisphenol A |
| 5) | 0,35 g | Triphenylphosphin |
| 6) | 61,30 g | Ethoxypropanol |

### Durchführung:

Die Komponenten 1) bis 2) wurden nacheinander in einen Reaktor gegeben und 3 Stunden lang auf 130 °C erhitzt. Anschließend wurden die Komponenten 3) bis 5) zugegeben und die Reaktionsmischung 5 Stunden lang auf 140 bis 160 °C erhitzt. Zu dem so erhaltenen Festharz wurde anschließend Komponente 6) zugegeben, die als Lösungsmittel und Viskositätsregler dient und die Mischung homogenisiert. Die Auswaage betrug 499,95 g; die gesamte Substanz wurde zur Herstellung einer wäßrigen Dispersion eingesetzt (siehe Stufe II).

### Stufe II: Herstellung der Festharz-Dispersion

### Ansatz:

| | | |
|---|---|---|
| 1) | 499,95 g | Auswaage aus Stufe I |
| 2) | 69,92 g | destilliertes Wasser einer Temperatur von 50 °C |
| 3) | 7,26 g | C12/14-Fettalkohol-glycidylether ("Rütapox Z8", Firma Rüttgers) |
| 4) | 218,80 g | destilliertes Wasser einer Temperatur von 20 °C |
| 5) | 4,84 g | Ethylenglykol |
| 6) | 4,04 g | Nopco DSX 1550 (Polyurethanpolymer in Wasser/Butyldiglykol; Firma Nopco) |

### Durchführung:

Komponente 1) wurde auf 65 °C erwärmt. Nun wurde Komponente 2) zugefügt und die Mischung 15 Minuten bei 65 °C Temperatur homogenisiert. Man ließ dann auf 45 °C abkühlen und prüfte (durch Entnahme einer kleinen Probe der Emulsion und Lösen dieser Probe in einem großen Überschuß Wasser, wobei sich die Emulsion sofort spontan im Wasser fein verteilen muß), ob eine Inversion des Emulsionstyps von W/O zu O/W stattgefunden hatte. Dies traf zu. Nun wurde die Komponente 3) zugegeben und die Mischung 10 Minuten homogenisiert, anschließend erfolgte - zuerst langsam, bei niedriger werdender Viskosität schneller - die Zugabe der Komponente 4) nebst 15-minütigem Rühren ohne Kühlung. Schließlich wurde Komponente 5) zugegeben, die Mischung homogenisiert und anschließend wurde Komponente 6) eingerührt.
Die Dispersion wurde wie folgt charakterisiert: Der mittlere Partikeldurchmesser betrug 980 nm, die Viskosität betrug 1070 mPas, das Epoxid-Äquivalentgewicht betrug 1040.

### Beispiel 5

### Stufe I: Herstellung des Festharzes

### Ansatz:

| | | |
|---|---|---|
| 1) | 65,31 g | Chemres E20 (Bisphenol-A basiertes Epoxidharz der Firma Henkel SpA mit einem mittleren Epoxidäquivalentgewicht von ungefähr 190 g) |
| 2) | 100,12 g | Jeffamine M 2070 (Firma Huntsman) |
| 3) | 19,35 g | Jeffamine M 600 (Firma Huntsman) |
| 4) | 617,17 g | Chemres E20 |
| 5) | 187,46 g | Bisphenol A |
| 6) | 0,73 g | Triphenylphosphin |
| 7) | 112,50 g | Ethoxypropanol |

### Durchführung:

Die Komponenten 1) bis 3) wurden nacheinander in einen Reaktor gegeben und 3 Stunden lang auf 130 °C erhitzt. Anschließend wurden die Komponenten 4) bis 6) zugegeben und die Reaktionsmischung 5 Stunden lang auf 140 bis 160 °C erhitzt. Zu dem so erhaltenen Festharz wurde anschließend Komponente 7) zugegeben, die als Lösungsmittel und Viskositätsregler dient und die Mischung homogenisiert. Die Auswaage betrug 1102,64 g; die gesamte Substanz wurde zur Herstellung einer wäßrigen Dispersion eingesetzt (siehe Stufe II).

### Stufe II: Herstellung der Festharz-Dispersion

### Ansatz:

| | | |
|---|---|---|
| 1) | 1102,64 g | Auswaage aus Stufe I |
| 2) | 154,21 g | destilliertes Wasser einer Temperatur von 50 °C |
| 3) | 10,0 g | C12/14-Fettalkohol-glycidylether ("Rütapox Z8", Firma Rüttgers) |
| 4) | 482,54 g | destilliertes Wasser einer Temperatur von 20 °C |
| 5) | 10,67 g | Ethylenglykol |
| 6) | 8 ,90 g | Nopco DSX 1550 (Polyurethanpolymer in Wasser/Butyldiglykol; Firma Nopco) |

### Durchführung:

Komponente 1) wurde auf 65 °C erwärmt. Nun wurde Komponente 2) zugefügt und die Mischung 15 Minuten bei 65 °C Temperatur homogenisiert. Man ließ dann auf 45 °C abkühlen und prüfte (durch Entnahme einer kleinen Probe der Emulsion und Lösen dieser Probe in einem großen Überschuß Wasser, wobei sich die Emulsion sofort spontan im Wasser fein verteilen muß), ob eine Inversion des Emulsionstyps von W/O zu O/W stattgefunden hatte. Dies traf zu. Nun wurde die Komponente 3) zugegeben und die Mischung 10 Minuten homogenisiert, anschließend erfolgte - zuerst langsam, bei niedriger werdender Viskosität schneller - die Zugabe der Komponente 4) nebst 15-minütigem Rühren ohne Kühlung. Schließlich wurde Komponente 5) zugegeben, die Mischung homogenisiert und anschließend wurde Komponente 6) eingerührt.

## Patentansprüche

1. Selbstdispergierbare härtbare Epoxidharze, die dadurch erhältlich sind, daß man (a) 1,0 Äquivalente Epoxidharz, (b) 0,01 - 1,0 Äquivalente eines polyfunktionellen Phenoles und (c) 0,005 - 0,5 Äquivalente eines Amin-Epoxidadduktes, wobei das Amin-Epoxidaddukt (c) ein Reaktionsprodukt eines aromatischen Polyepoxides mit einem Polyoxyalkylenamin darstellt, umsetzt, **dadurch gekennzeichnet, daß** man die zur Herstellung des Amin-Epoxidadduktes (c) eingesetzten Verbindungen, nämlich das aromatische Polyepoxid und das Polyoxyalkylenamin, im Äquivalentverhältnis von 1: 0,10 bis 1 : 0,28 einsetzt.

2. Wäßrige Dispersion mit einem Gehalt an einem oder mehreren der Epoxidharze gemäß Anspruch 1.

3. Wäßrige Dispersionen gemäß Anspruch 2, wobei die mittlere Teilchengröße der dispergierten Teilchen 1000 nm oder weniger beträgt.

4. Verfahren zur Herstellung von selbstdispergierbaren härtbaren Epoxidharzen, **dadurch gekennzeichnet, daß** man (a) 1,0 Äquivalente Epoxidharz, (b) 0,01 - 1,0 Äquivalente eines polyfunktionellen Phenoles und (c) 0,005 - 0,5 Äquivalente eines Amin-Epoxidadduktes, wobei das Amin-Epoxidaddukt (c) ein Reaktionsprodukt eines aromatischen Polyepoxides mit einem Polyoxyalkylenamin darstellt, umsetzt, wobei man die zur Herstellung des Amin-Epoxidadduktes (c) eingesetzten Verbindungen, nämlich das aromatische Polyepoxid und das Polyoxyalkylenamin, im Äquivalentverhältnis von 1: 0,10 bis 1 : 0,28 einsetzt.

5. Verfahren nach Anspruch 4, wobei man die Reaktion als Eintopfreaktion durchführt.

6. Verwendung der Epoxidharze gemäß einem der Ansprüche 1 bis 5 zur Herstellungen von Beschichtungen.

## Claims

1. Self-dispersible curable epoxy resins obtainable by reaction of (a) 1.0 equivalent of epoxy resin, (b) 0.01 to 1.0 equivalent of a polyhydric phenol and (c) 0.005 to 0.5 equivalent of an amine/epoxy adduct, the amine/epoxy adduct (c) being a reaction product of an aromatic polyepoxide with a polyoxyalkyleneamine, **characterized in that** the compounds used for the preparation of the amine/epoxy adduct (c), namely the aromatic polyepoxide and the polyoxyalkyleneamine, are used in an equivalent ratio of 1:0.10 to 1:0.28.

2. An aqueous dispersion containing one or more of the epoxy resins claimed in claim 1.

3. Aqueous dispersions as claimed in claim 2, **characterized in that** the average particle size of the dispersed particles is about 1000 nm or less.

4. A process for the production of self-dispersible curable epoxy resins, **characterized in that** (a) 1.0 equivalent of epoxy resin, (b) 0.01 to 1.0 equivalent of a polyhydric phenol and (c) 0.005 to 0.5 equivalent of an amine/epoxy adduct are reacted, the amine/epoxy adduct (c) being a reaction product of an aromatic polyepoxide with a polyoxyalkyleneamine and the compounds used for the preparation of the amine/epoxy adduct (c), namely the aromatic polyepoxide and the polyoxyalkyleneamine, being used in an equivalent ratio of 1:0.10 to 1:0.28.

5. A process as claimed in claim 4, **characterized in that** the reaction is carried out as a one-pot reaction.

6. The use of the epoxy resins claimed in any of claims 1 to 5 for the production of coatings.

## Revendications

1. Résines époxyde durcissables, auto-dispersables, qui l'on peut obtenir en faisant réagir (a) 1,0 équivalent de résine époxyde, (b) 0,01 - 1,0 équivalent d'un phénol polyfonctionnel et (c) 0,005 - 0,5 équivalent d'un produit d'addition amine-époxyde, le produit d'addition amine-époxyde (c) correspondant à un produit de réaction d'un polyépoxyde aromatique avec une polyoxyalkylèneamine,
**caractérisé en ce qu'**
on utilise les composés employés pour la préparation du produit d'addition amine-époxyde (c), à savoir le polyépoxyde aromatique et la polyoxyalkylèneamine, dans un rapport équivalent de 1 : 0,10 à 1 : 0,28.

2. Dispersion aqueuse contenant une ou plusieurs des résines époxyde selon la revendication 1.

3. Dispersions aqueuses selon la revendication 2, dans lesquelles la taille moyenne des particules dispersées est égale ou inférieure à 1000 nm.

4. Procédé de préparation de résines époxyde durcissables, auto-dispersables,
**caractérisé en ce qu'**
on fait réagir (a) 1,0 équivalent de résine époxyde, (b) 0,01 - 1,0 équivalent d'un phénol polyfonctionnel et (c) 0,005 - 0,5 équivalent d'un produit d'addition amine-époxyde, le produit d'addition amine-époxyde (c) correspondant à un produit de réaction d'un polyépoxyde aromatique avec une polyoxyalkylèneamine, en utilisant les composés employés pour la préparation du produit d'addition amine-époxyde (c), à savoir le polyépoxyde aromatique et la polyoxyalkylèneamine, dans un rapport équivalent de 1 : 0,10 à 1 : 0,28.

5. Procédé selon la revendication 4, dans lequel on met en oeuvre la réaction dans un réacteur unique, sans séparation de produits intermédiaires.

6. Utilisation des résines époxyde selon l'une des revendications 1 à 5 pour la fabrication de revêtements.
